# FASCICULE DE BREVET EUROPEEN

(11) **EP 1 144 320 B1**
(45) Date de publication et mention de la délivrance du brevet: **26.03.2003**
(21) Numéro de dépôt: 99973007.0
(22) Date de dépôt: 01.12.1999
(51) Int. Cl.: C03B 5/00, C03B 3/00, C03B 5/02, G21F 9/00, C03B 5/027

(54) **PROCEDE ET DISPOSITIF D'INCINERATION ET DE VITRIFICATION DE DECHETS, NOTAMMENT RADIOACTIFS**
VERFAHREN UN VORRICHTUNG ZUM VERBRENNEN UND VERGLASEN VON ABFÄLLEN, INSBESONDERE RADIOAKTIVEN ABFÄLLEN
METHOD AND DEVICE FOR INCINERATION AND VITRIFICATION OF WASTE, IN PARTICULAR RADIOACTIVE WASTE

(30) Priorité: 01.12.1998 KR 9852360; 01.12.1998 KR 9852361
(43) Date de publication de la demande: 17.10.2001
(73) Titulaire: SOCIETE GENERALE POUR LES TECHNIQUES NOUVELLES S.G.N., 78182 Saint-Quentin-en-Yvelines Cédex (FR); Korea Hydro & Nuclear Power Company, Seoul 135-791 (KR)
(72) Inventeur: BRUNELOT, Pierre, F-33700 Merignac (FR); LACOMBE, Jacques, F-30131 Pujaut (FR); MERLIN, Serge, F-91430 Igny (FR); ROUX, Patrice, F-75015 Paris (FR); THIEBAUT, Valérie, F-30150 Roquemaure (FR); CHOI, Kwan-Sik, Taejon 305-390 (KR); SONG, Myung-Jae, Taejon 305-333 (KR)
(74) Mandataire: Le Roux, Martine
(86) Numéro de dépôt international: FR9902978
(87) Numéro de publication internationale: WO00032525

(56) Documents cités:
- EP-A- 0 647 598
- WO-A-95/04004
- DE-C- 4 446 576
- US-A- 3 607 171
- US-A- 5 643 350

## Description

La présente invention a pour objet un procédé et un dispositif d'incinération et de vitrification de déchets, notamment radioactifs.

Ladite invention s'inscrit dans le cadre du traitement de déchets combustibles dangereux, dont il convient d'immobiliser de façon stable les cendres. On a longtemps procédé, pour la neutralisation de ce type de déchets, en deux étapes, chacune desdites étapes étant mise en oeuvre dans un dispositif indépendant :
- une première étape d'incinération desdits déchets organiques, solides divisés et/ou liquides, dans un dispositif d'incinération ;
- une seconde étape d'immobilisation des cendres récupérées à l'issue de ladite première étape, ladite seconde étape étant mise en oeuvre dans un dispositif adéquat qui renferme un bain de verre maintenu à l'état fondu.

Depuis quelques années toutefois, des procédés de traitement de déchets ont été décrits, selon lesquels lesdites deux étapes d'incinération desdits déchets et d'immobilisation des cendres résultantes ont été mises en oeuvre dans un même et unique dispositif. On parle, dans ce contexte, de vitrification directe.

Des résultats obtenus dans ledit contexte par les Demanderesses ont notamment été présentés au KAIF' 98, le "Korean Atomic Industrial Forum" qui s'est tenu du 14 au 17 avril 1998 à Séoul, en Corée du Sud. Lesdits résultats ont démontré la faisabilité d'un procédé de vitrification directe, selon lequel les déchets sont principalement brûlés à la surface d'un bain de verre fondu, en atmosphère oxydante, les cendres générées étant piégées et immobilisées dans ledit bain de verre fondu ; ledit procédé étant mis en oeuvre dans un creuset froid, ledit bain de verre fondu étant chauffé par induction.

Les Demanderesses, en poursuivant leurs travaux sur la vitrification directe, ont conçu et développé la présente invention, qui s'analyse comme un perfectionnement à ladite vitrification directe, telle que connue à ce jour. Le perfectionnement, qui constitue le principal objet de la présente invention, s'analyse tant en termes de procédé que de dispositif et intervient au niveau de l'introduction des déchets. Ledit perfectionnement que l'on peut qualifier, pour la clarté du présent exposé, de perfectionnement principal, est avantageusement mis en oeuvre avec d'autres perfectionnements que l'on peut qualifier, dans le même esprit, de perfectionnements secondaires. Lesdits perfectionnements, principal et secondaires sont ci-après décrits, en termes généraux puis, de façon plus détaillée, en référence aux figures annexées.

Selon son premier objet, la présente invention concerne donc un procédé de traitement de déchets organiques (donc combustibles), solides divisés (pour faciliter leur introduction et leur combustion) et/ou liquides, mis en oeuvre dans un unique réacteur renfermant un bain de verre fondu surmonté d'une phase gazeuse ; ledit procédé de traitement comprenant : l'incinération, en présence d'oxygène, desdits déchets à la surface dudit bain de verre fondu (lesdits déchets tombent à ladite surface, s'y décomposent et les produits gazeux qui résultent de cette décomposition sont brûlés dans ladite phase gazeuse oxygénée), et la vitrification desdits déchets incinérés dans ledit bain de verre fondu. En cela, le procédé de l'invention est un procédé de vitrification directe.

De façon caractéristique, selon l'invention, l'introduction desdits déchets dans ledit réacteur (dans la phase gazeuse dudit réacteur) est mise en oeuvre avec double refroidissement. On peut parler d'un refroidissement du dispositif d'alimentation dudit réacteur en lesdits déchets per se et d'un refroidissement indirect, via ledit dispositif, des déchets en cours d'introduction. En fait, ledit dispositif d'alimentation dudit réacteur en lesdits déchets est refroidi, d'une part, côté phase gazeuse traversée, et d'autre part, avantageusement de façon indépendante, côté arrivée desdits déchets.

Le premier desdits refroidissements est avant tout destiné à protéger ledit dispositif d'alimentation de la corrosion, développée par la phase gazeuse à son contact ; le second desdits refroidissements est avant tout destiné à minimiser les calories transférés aux déchets arrivants, ce dans le but de minimiser la vaporisation des déchets liquides, d'éviter le collage des déchets solides, collage susceptible d'entraîner le bouchage dudit dispositif d'alimentation.

Pour la mise en oeuvre de ces refroidissements, dans la structure dudit dispositif d'alimentation, on prévoit la circulation de fluides caloporteurs, généralement de liquides caloporteurs. Selon une variante de mise en oeuvre particulièrement préférée dudit double refroidissement, il est prévu, pour au moins la mise en oeuvre du premier desdits refroidissements, la circulation d'au moins un fluide caloporteur, ledit fluide étant maintenu à une température supérieure au point de rosée de la phase gazeuse traversée. On vise ainsi à éviter toute condensation de ladite phase gazeuse sur les parois dudit dispositif d'alimentation. Ce phénomène de condensation est évidemment néfaste, en référence aux problèmes de corrosion. Il est par ailleurs susceptible, de générer des arcs électriques, donc de poser de sérieux problèmes, lors de la mise en oeuvre d'un chauffage du bain de verre par induction. Dans le cadre de cette variante avantageuse, on peut notamment utiliser à titre de fluide caloporteur "chaud", de l'eau surchauffée.

L'intérêt de l'intervention d'un tel fluide "chaud" est évident, pour la mise en oeuvre du premier desdits refroidissements (côté phase gazeuse traversée). Pour la mise en oeuvre du second desdits refroidissements (côté arrivée de déchets), l'intervention d'un tel fluide "chaud" ne peut bien évidemment être envisagée qu'avec des déchets susceptibles de supporter la température d'un tel fluide "chaud"... Généralement, le second desdits refroidissements est mis en oeuvre avec un fluide "froid", tel de l'eau à la température ambiante.

Le principe du perfectionnement principal, apporté selon l'invention au procédé de vitrification directe, étant posé (c'est-à-dire celui du double refroidissement mis en oeuvre à l'introduction des déchets), sa mise en oeuvre peut se décliner selon différentes variantes, dans des contextes quelque peu différents.

On peut notamment mettre en oeuvre le procédé de l'invention avec un bain de verre quasiment pré-constitué (présent dans le réacteur, avant l'introduction des déchets) ou avec un bain de verre qui se constitue au fur et à mesure à partir d'une charge initiale minimale. Dans le cadre de cette seconde variante, préférée, le réacteur contient au démarrage un bain de verre initial de faible volume (un fond) et il est ensuite alimenté, d'une part en déchets, d'autre part en éléments constitutifs d'un bain de verre. Lesdits déchets et lesdits éléments constitutifs sont d'ailleurs avantageusement introduits en mélange... les déchets pouvant en fait être assimilés à des précurseurs d'éléments constitutifs dudit bain de verre. Le réacteur est ainsi alimenté en continu avec des déchets et avec des éléments constitutifs du bain de verre, voire des additifs auxdits éléments. Lorsqu'un certain niveau est atteint, on arrête les deux types d'alimentation et on peut vidanger le bain de verre ainsi constitué.

Les déchets, introduits de façon caractéristique, "refroidis", sont incinérés à la surface du bain de verre fondu, en présence d'oxygène. Ledit oxygène est délivré dans la phase gazeuse pour y assurer sa fonction de comburant.

Ledit oxygène intervient avantageusement, pour une optimisation de l'incinération en cause, en une quantité supérieure à la quantité stoechiométrique, théoriquement requise. Il intervient avantageusement en une quantité correspondant à 1,25 à 1,5 fois ladite quantité stoechiométrique. Ladite quantité est, en tout état de cause, contrôlée et n'affecte pas la dépression, maintenue dans le réacteur, de façon classique, pour des raisons évidentes de sécurité. Ladite dépression est entretenue par une aspiration des gaz de combustion, aspiration mise en oeuvre dans des conditions telles que l'entraînement des déchets et surtout des cendres est minimisé.

La distribution dudit oxygène au sein de la phase gazeuse qui surplombe le bain de verre fondu est avantageusement optimisée. On vise notamment à parfaire le mélange déchets/oxygène, à l'introduction desdits déchets. Ainsi, lesdits déchets sont-ils avantageusement introduits, cernés par un courant d'oxygène. Pour l'obtention d'un tel résultat, on fait avantageusement intervenir, dans la structure du dispositif d'alimentation en lesdits déchets, au moins un circuit d'amenée d'oxygène. Un tel circuit intervient généralement en sus de moyens d'alimentation en oxygène qui délivrent ledit oxygène dans la phase gazeuse du réacteur, moyens indépendants du dispositif d'alimentation en les déchets.

En sus dudit oxygène, délivré à titre de comburant dans la phase gazeuse, il intervient avantageusement dans le cadre de la mise en oeuvre du procédé de l'invention, de l'oxygène dans le bain de verre fondu. En effet, ledit procédé comprend avantageusement l'injection d'oxygène dans ledit bain de verre fondu, en une quantité suffisante pour minimiser voire éviter la formation de métal au sein dudit bain de verre ; avantageusement, en une quantité suffisante pour minimiser voire éviter la formation de métal au sein dudit bain de verre et pour assurer une agitation modérée dudit bain de verre.

Ledit oxygène, injecté dans le bain de verre, permet d'ajuster le potentiel d'oxydo-réduction dudit bain de verre, permet de limiter le caractère réducteur du verre.

En maîtrisant ainsi le potentiel d'oxydo-réduction du bain de verre, on peut éviter, au sein dudit bain de verre, la réduction d'oxydes et donc la formation de métaux. La présence de ces métaux, au sein dudit bain, nuit fortement à l'homogénéité dudit bain, et donc à la qualité de la vitrification mise en oeuvre. De surcroît, cette présence est susceptible de soulever de réelles difficultés lors de la mise en oeuvre d'un chauffage par induction...

L'oxygène injecté dans le bain de verre pour minimiser, voire éviter la formation de métal l'est avantageusement en une quantité suffisante pour également assurer une certaine agitation dudit bain de verre. L'homme du métier est à même d'optimiser la quantité d'oxygène nécessaire à ces fins. En tout état de cause, celle-ci doit être suffisante pour l'obtention de l'effet escompté quant à la valeur du potentiel d'oxydo-réduction, voire des effets escomptés quant à la valeur dudit potentiel et quant à l'effet d'agitation recherché mais ne doit pas être excessive dans la mesure où le bain de verre, certes agité, brassé, doit rester un bain de verre et non pas se transformer en une mousse....

On a parlé d'oxygène, intervenant à titre de comburant dans la phase gazeuse et avantageusement à titre de gaz oxydant dans le bain de verre, ceci dans la mesure où ledit oxygène intervient généralement, à titre de gaz "pur". Il ne saurait toutefois être totalement exclu du cadre de l'invention l'intervention d'un gaz, renfermant de l'oxygène et notamment l'intervention d'air enrichi ou non en oxygène, tant à titre de comburant qu'à titre de gaz oxydant.

L'oxygène, injecté dans le bain de verre, à titre de gaz oxydant, est avantageusement introduit dans le réacteur en dessous de la surface dudit bain de verre. Ainsi, les moyens d'injection dudit oxygène ne traversent-ils pas la phase gazeuse dudit réacteur, n'ont-ils à subir qu'un type de corrosion : celle inhérente audit bain de verre.

Ce type de remarque s'applique à tout dispositif destiné à pénétrer dans ledit bain de verre pour y délivrer un élément quelconque (on vient d'invoquer l'injection d'oxygène) ou pour y mesurer un paramètre quelconque (tel que la température, le potentiel d'oxydo-réduction...). Ainsi, tout dispositif destiné à pénétrer dans ledit bain de verre est-il avantageusement introduit dans le réacteur en dessous de la surface dudit bain de verre, de façon à éviter tout contact avec la phase gazeuse.

Le procédé de l'invention, mis en oeuvre avec un double refroidissement du dispositif d'alimentation du réacteur en les déchets à incinérer et vitrifier, est, de manière générale, avantageusement mis en oeuvre avec refroidissement des parois du réacteur et/ou de tout moyen, introduit dans ledit réacteur, tant au niveau de la phase gazeuse que du bain de verre. Le refroidissement spécifique dudit dispositif d'alimentation en déchets ayant déjà été évoqué, on vise ici le refroidissement de tous les autres moyens susceptibles d'être introduits dans le réacteur et notamment ceux convenant pour son alimentation en oxygène, tant au niveau de sa phase gazeuse (ledit oxygène intervenant alors à titre de comburant) qu'avantageusement au niveau dudit bain de verre (ledit oxygène intervenant alors à titre d'oxydant pour ajuster le potentiel d'oxydo-réduction dudit bain de verre et avantageusement à titre de moyen d'agitation).

Cette liste des moyens, à refroidir avantageusement, n'est pas limitative. On peut y adjoindre, à titre illustratif, des moyens pour mesurer la température de la phase gazeuse, des moyens pour mesurer la température du bain de verre, des moyens pour assurer le potentiel d'oxydo-réduction dudit bain de verre, des moyens de mesure du niveau dudit bain de verre...

Un tel refroidissement est destiné avant tout à protéger lesdites parois et lesdits moyens de la corrosion. Il est également opportun pour préserver les dispositifs d'étanchéité installés au niveau des traversées desdites parois.

Pour la mise en oeuvre d'un tel refroidissement au niveau des parois du réacteur et des différents moyens introduits dans ledit réacteur, on fait classiquement appel à des fluides caloporteurs, généralement à des liquides caloporteurs. En fait, on adjoint auxdites parois et auxdits moyens, des circuits de circulation de tels fluides. Selon une variante de mise en oeuvre particulièrement préférée dudit refroidissement, il est prévu, au moins dans les parois au contact de la phase gazeuse et/ou au moins dans les moyens introduits dans le réacteur au contact de ladite phase gazeuse, une circulation d'au moins un fluide caloporteur, ledit fluide étant maintenu à une température supérieure au point de rosée de ladite phase gazeuse. On a vu précédemment, en référence au double refroidissement du dispositif d'alimentation en les déchets, l'avantage de faire intervenir un fluide caloporteur "chaud", telle de l'eau surchauffée. On évite la condensation à la surface desdites parois et/ou desdits moyens...

Dans le cadre du procédé de l'invention, pour le chauffage et maintien du bain de verre fondu à la température adéquate, il peut être fait appel à diverses techniques. Ledit bain de verre peut ainsi être chauffé, par induction, à la flamme, à la torche plasma ou au moyen d'électrodes plongeantes. Il n'est pas exclu d'utiliser plusieurs desdites techniques, en combinaison. Le chauffage par induction est préféré ; le chauffage par induction, mis en oeuvre en creuset froid est tout particulièrement préféré.

Le procédé de l'invention, tel que décrit ci-dessus ainsi que ci-après, en référence aux figures annexées, convient tout particulièrement pour le traitement - la vitrification directe - de déchets radioactifs.

Ledit procédé de l'invention est généralement mis en oeuvre avec une alimentation en continu des déchets ; lesdits déchets étant introduits au dessus de la surface du bain de verre, éventuellement en mélange avec des éléments constitutifs dudit bain de verre. A l'issue de l'incinération d'une charge et de la digestion des cendres générées dans le bain de verre, ledit bain de verre chargé est vidangé. On a donc généralement une alimentation en continu (une constitution de la charge en continu) et une vidange en discontinu.

On peut encore noter, pour ce qui concerne la mise en oeuvre du procédé de l'invention, ce qui suit.

L'alimentation du réacteur en les déchets et en l'oxygène est évidemment avantageusement optimisée pour assurer une combustion maximale desdits déchets et un entraînement minimal desdits déchets, brûlés ou pas, par les gaz de combustion. Cette optimisation repose sur la maîtrise , conjuguée, de nombreux paramètres, certains ayant déjà été évoqués, et notamment par la maîtrise :
- de la taille desdits déchets,
- de la quantité d'oxygène délivrée,
- du niveau d'introduction des déchets par rapport à la surface du bain de verre (on prévoit avantageusement de régler le niveau d'introduction desdits déchets par un réglage de la profondeur d'introduction du dispositif d'alimentation en lesdits déchets du réacteur),
- de la qualité du mélange déchets/oxygène, à l'introduction desdits déchets. On a déjà vu que l'on introduit avantageusement lesdits déchets, cernés par de l'oxygène. On fait avantageusement intervenir à cette fin, dans la structure du dispositif d'alimentation en lesdits déchets, au moins un circuit d'amenée d'oxygène.

On se propose d'aborder maintenant, en termes généraux, le deuxième objet de la présente invention, à savoir un dispositif de traitement, par incinération et vitrification, de déchets organiques, solides divisés et/ou liquides ; dispositif convenant à la mise en oeuvre du procédé décrit ci-dessus. Ledit dispositif comprend, de façon classique, un réacteur, d'une part associé à des moyens de chauffage, aptes à maintenir dans le fond dudit réacteur un bain de verre fondu et d'autre part équipé des moyens ci-après :
- de moyens de vidange dudit bain de verre fondu,
- d'un dispositif d'alimentation en les déchets à incinérer et vitrifier, ledit dispositif débouchant au-dessus de la surface dudit bain de verre fondu et sa profondeur d'introduction dans ledit réacteur étant avantageusement réglable ;
- de moyens d'alimentation en oxygène, délivrant ledit oxygène au-dessus de la surface dudit bain de verre fondu (pour la mise en oeuvre de l'incinération) ;
- d'au moins une sortie des gaz de combustion, ménagée, dans la partie haute dudit réacteur, bien au-dessus de la surface dudit bain de verre fondu (on vise à minimiser l'entraînement des cendres).

De façon caractéristique, ledit dispositif comprend un dispositif d'alimentation en les déchets à incinérer et vitrifier spécifique. Ce dernier présente une structure tubulaire, délimitée par une surface externe et une surface interne ; ladite structure incluant dans sa masse, au moins deux circuits de circulation, avantageusement indépendants, pour des fluides caloporteurs :
- au moins un pour assurer le refroidissement de sa masse et de sa surface externe (en vue de minimiser les problèmes de corrosion), et
- au moins un autre pour assurer le refroidissement de sa surface interne (en vue de transférer le minimum de calories aux déchets arrivants).

Ladite structure peut inclure plusieurs circuits indépendants pour assurer chacun desdits deux types de refroidissements.

Elle peut également avantageusement inclure des moyens pour véhiculer et délivrer en son extrémité débouchante (au-dessus du bain de verre) de l'oxygène. La délivrance dudit oxygène peut notamment être assurée à partir d'un tore. agencé autour de l'extrémité débouchante dudit dispositif, ledit tore étant percé d'orifices adéquats judicieusement répartis. Le contact déchets/oxygène (comburant) peut ainsi être optimisé.

Les entrées et sorties des fluides caloporteurs, mis en circulation dans la structure du dispositif d'alimentation en déchets du réacteur ainsi que l'entrée de l'oxygène, mis avantageusement en circulation dans ladite structure, sont raccordées à des unités de distribution et d'évacuation adéquates. La répartition desdits fluides et dudit oxygène, dans leur circuit(s) de circulation respectif(s), à l'intérieur dudit dispositif d'alimentation, est avantageusement effectuée au moyen d'un ensemble de chambres et canaux de répartition, judicieusement agencés.

Les éléments essentiels du dispositif de l'invention, nécessaires à la mise en oeuvre du procédé d'incinération et de vitrification visé, sont ceux mentionnés ci-dessus. Il peut s'adjoindre auxdits éléments d'autres éléments, tels des moyens pour mesurer la température de la phase gazeuse, des moyens pour mesurer la température du bain de verre fondu, des moyens pour mesurer le niveau dudit bain de verre, des moyens pour mesurer le potentiel d'oxydo-réduction dudit bain de verre fondu....

Il s'adjoint avantageusement auxdits éléments, essentiels ou non, des moyens pour injecter de l'oxygène dans ledit bain de verre fondu.

Lesdits moyens sont avantageusement introduits dans la partie basse du réacteur, en dessous de la surface du bain de verre de sorte qu'ils ne contactent pas la phase gazeuse, qu'ils ne subissent qu'un type de corrosion (celle développée par le bain de verre).

Lesdits moyens sont également avantageusement agencés de sorte qu'à l'arrêt de leur alimentation en oxygène, il ne se constitue pas, à leur extrémité débouchante, un bouchon de verre. Ainsi, lesdits moyens pour injecter de l'oxygène dans ledit bain de verre sont-ils avantageusement disposés verticalement, au travers du fond (de la sole inférieure) du réacteur, avec une embouchure, disposée à 90° de leur axe vertical.

On a vu que, de manière générale, tous les moyens introduits dans ledit réacteur, ceux introduits dans la phase gazeuse et ceux introduits dans le bain de verre, en sus du dispositif d'alimentation dudit réacteur en les déchets, sont avantageusement refroidis. Ainsi, selon une variante avantageuse de réalisation du dispositif de l'invention, tous lesdits moyens introduits dans le réacteur, notamment les moyens d'alimentation en oxygène de la phase gazeuse, les moyens d'injection d'oxygène dans le bain de verre, s'ils sont présents, incluent dans leur structure, au moins un circuit de circulation d'un fluide caloporteur.

De manière avantageuse, le réacteur est également refroidi. Ses parois. sont avantageusement du type double enveloppe, pour permettre la circulation d'un fluide caloporteur.

Les moyens de chauffage associés audit réacteur peuvent être de différents types et notamment convenir pour la mise en oeuvre d'un chauffage par induction, à la flamme, à la torche plasma ou au moyen d'électrodes plongeantes. Selon une variante de réalisation particulièrement préférée, le réacteur utilisé est un creuset froid et lesdits moyens de chauffage sont des moyens de chauffage par induction.

On se propose maintenant de décrire l'invention sous ses aspects procédé et dispositif en référence aux figures annexées.

La figure 1 est une vue schématique de fonctionnement d'un dispositif de l'invention.

La figure 2 est une vue en coupe, plus détaillée, d'un dispositif de même type. Sur ladite figure 2, on trouve les moyens pour mettre en oeuvre, au niveau de l'introduction des déchets, le double refroidissement de l'invention.

La figure 3 est une vue en coupe, détaillée, du dispositif d'alimentation en déchets.

La figure 4 est une vue en coupe, détaillée, des moyens d'injection d'oxygène dans le bain de verre.

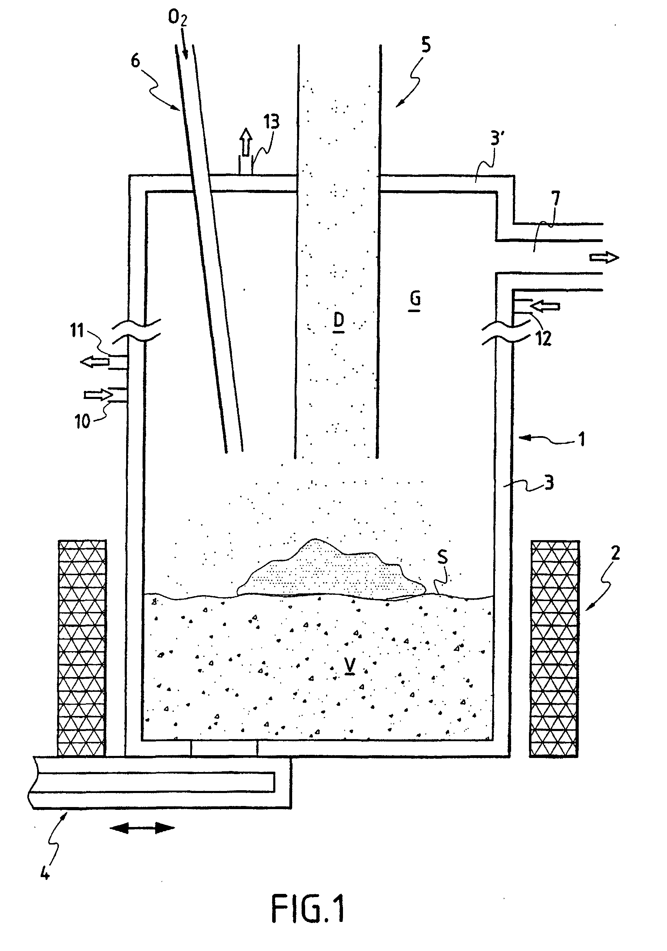

Sur lesdites figures 1 à 4, on a utilisé les mêmes références pour désigner les mêmes éléments, de façon schématique ou détaillée.

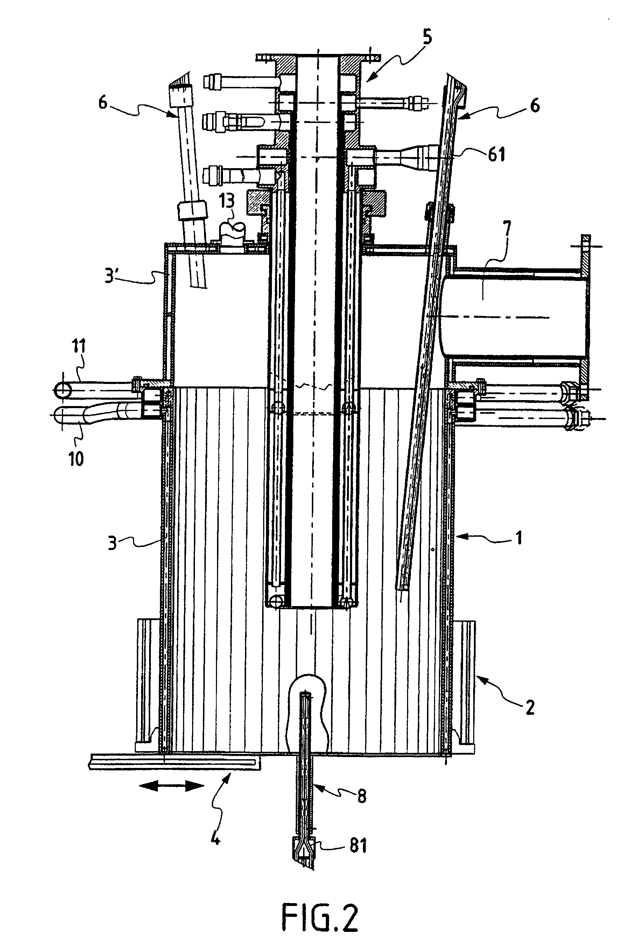

Le dispositif de l'invention qui convient pour traiter - par incinération et vitrification, par vitrification directe - des déchets D, comprend un réacteur 1 associé à des moyens de chauffage 2. Lesdits moyens 2 de chauffage représentés sur les figures 1 et 2 conviennent pour un chauffage par induction. Au sein dudit réacteur 1, on trouve le bain de verre fondu V, surmonté de la phase gazeuse G (figure 1).

En référence à ladite figure 1, on résume le procédé de l'invention.

Les déchets D sont amenés dans le réacteur 1 via le dispositif d'alimentation 5 en lesdits déchets D. Ils sont décomposés à la surface S du bain de verre fondu V. Les gaz résultants de cette décomposition brûlent au contact de l'oxygène, délivré principalement par les moyens 6. On a représenté sur ladite figure 1 un unique moyen 6 pour la délivrance dans la phase gazeuse dudit oxygène. Avantageusement il en intervient au moins deux, disposés de façon. symétrique, par rapport audit dispositif d'alimentation 5 en lesdits déchets D. On vise ainsi à optimiser le contact déchets D/oxygène, dans le but d'optimiser la combustion desdits déchets D.

Les cendres générées tombent dans le bain de verre V. A la surface S dudit bain V, on trouve généralement un amas de déchets en cours de décomposition.

Dans la partie haute dudit réacteur 1, il a été ménagé une sortie 7 pour les gaz de combustion. En dessous du fond dudit réacteur 1, on trouve des moyens 4 pour assurer la vidange du bain de verre V. Lesdits moyens 4 sont susceptibles, alternativement, d'obturer et d'ouvrir un orifice de vidange ménagé dans le fond dudit réacteur 1.

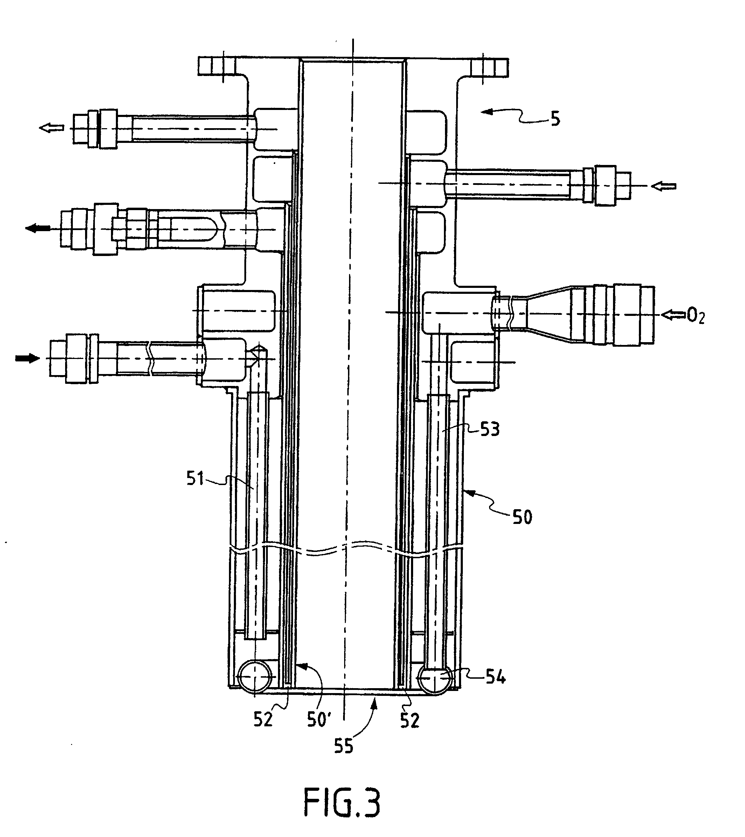

De façon caractéristique, le dispositif d'alimentation 5 en les déchets D est équipé de moyens aptes à assurer un double refroidissement de sa structure. Lesdits moyens ne figurent pas sur cette figure 1, schématique. Ils figurent sur les figures 2 et 3.

On a enfin montré, sur ladite figure 1, que les parois 3 et 3' dudit réacteur 1 sont du type double-enveloppe. Le réacteur 1 étant conçu en deux parties, on a référencé, 3, sa paroi dans la partie inférieure et 3', sa paroi dans la partie supérieure. Au sein de ces deux parois 3 et 3', il est prévu la circulation d'un fluide caloporteur. Pour la paroi 3, ledit fluide arrive en 10 et ressort en 11, pour la paroi 3', il arrive en 12 et ressort en 13.

Sur la figure 2, on retrouve, de façon plus détaillée, chacun des éléments référencés de la figure 1 (à l'exception de l'arrivée 12 du fluide de refroidissement, mis en circulation dans la paroi supérieure 3' du réacteur 1).

Pour une description plus détaillée du dispositif d'alimentation 5 en les déchets D, on renvoie aux commentaires développés plus loin en référence à la figure 3.

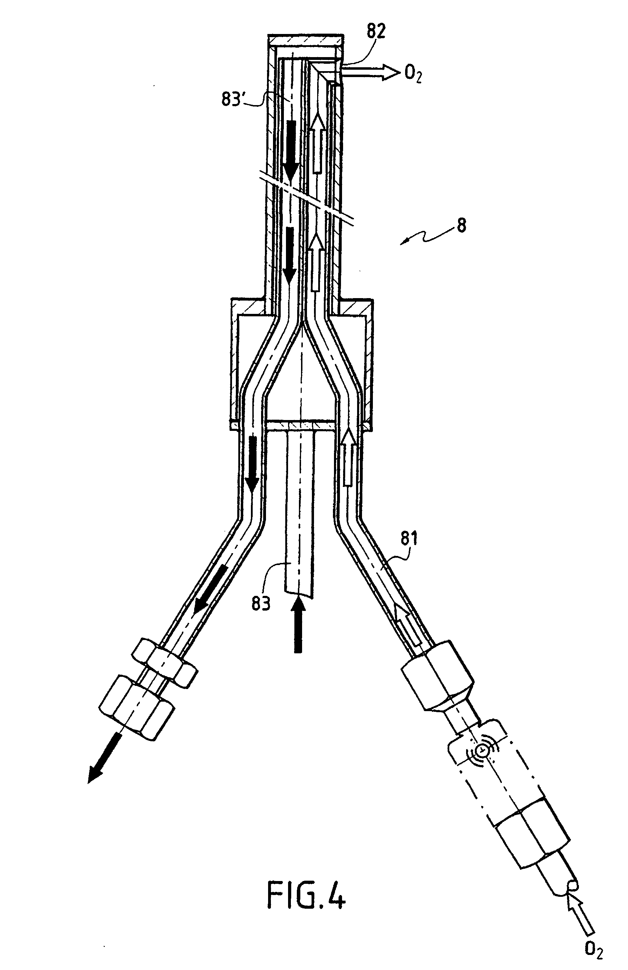

Pour une description plus détaillée des moyens 8 d'injection d'oxygène dans le bain de verre, on renvoie aux commentaires développés plus loin en référence à la figure 4.

On voit en effet, sur ladite figure 2, que le fond du réacteur 1 est traversé par des moyens d'injection 8 d'oxygène dans le bain de verre V. Lesdits moyens d'injection 8 sont disposés verticalement et présentent une embouchure 82 (voir figure 4), à 90° de leur axe vertical. Il est illustré sur la figure 2 une variante avantageuse de réalisation d'un dispositif de l'invention.

Sur ladite figure 2, on a représenté deux moyens 6, prévus pour l'alimentation en oxygène (en comburant) de la phase gazeuse. Il s'agit en fait de cannes. Au sein de la structure desdites cannes 6, il est prévu un circuit de circulation 61 d'un fluide caloporteur. Les cannes ainsi refroidies résistent mieux à la corrosion. On rappelle ici qu'elles sont avantageusement refroidies par circulation d'un fluide caloporteur "chaud" (maintenu à une température supérieure au point de rosée de la phase gazeuse traversée), pour éviter toute condensation sur leur surface externe.

Sur la figure 3, on a donc représenté une variante particulièrement avantageuse de réalisation du dispositif d'alimentation 5 du réacteur 1 en les déchets D. Ledit dispositif 5 présente une structure tubulaire, délimitée par une surface externe 50 et une surface interne 50'.

Dans sa masse, on trouve :
- au moins un circuit de circulation 51 pour un fluide caloporteur destiné à refroidir ladite masse et principalement ladite surface externe 50. La circulation dudit fluide caloporteur est schématisée par les flèches noires ;
- au moins un circuit de circulation 52 pour un fluide caloporteur destiné à refroidir ladite surface interne 50'. La circulation dudit fluide caloporteur est schématisée par les flèches blanches ; ainsi qu'
- au moins un circuit 53 + 54 pour véhiculer et délivrer en l'extrémité 55 dudit dispositif 5 de l'oxygène. Ledit oxygène est ainsi délivré, tout autour de ladite extrémité 55, via un tore 54. Ledit tore 54 présente des orifices de dimensions adéquates, judicieusement répartis pour délivrer ledit oxygène de façon optimisée. On optimise ainsi encore le contact déchets D/oxygène. Ledit oxygène, délivré via le dispositif d'alimentation 5 en déchets D, l'est en sus de l'oxygène délivré par les moyens 6 (voir figures 1 et 2).

On rappelle ici qu'il circule avantageusement en 51 un fluide "chaud". Les circuits de circulation 51 et 52 sont totalement indépendants l'un de l'autre.

Sur la figure 4, on a enfin représenté un moyen 8 d'injection d'oxygène dans le bain de verre. Un tel moyen intervient avantageusement en association avec un dispositif d'alimentation en déchets, tel que décrit ci-dessus. Ledit moyen 8 comporte un circuit d'amenée 81 dudit oxygène. La circulation dudit oxygène dans ledit circuit 81 a été schématisée par les flèches blanches. L'oxygène est délivré en 82, embouchure ménagée à 90° de l'axe dudit moyen 8.

Ledit moyen 8 inclut dans sa structure un circuit de circulation 83 + 83' d'un fluide caloporteur. Sa partie qui pénètre dans le bain de verre peut ainsi être refroidie. Ledit fluide caloporteur arrive dans 83 et repart, chargé de calories en 83'. Sa circulation est schématisée par les flèches noires.

## Revendications

1. Procédé de traitement de déchets (D) organiques, solides divisés et/ou liquides, mis en oeuvre dans un unique réacteur (1) renfermant un bain de verre fondu (V) surmonté d'une phase gazeuse (G), comprenant l'incinération, en présence d'oxygène, desdits déchets (D), à la surface (S) dudit bain de verre fondu (V), et la vitrification desdits déchets (D) incinérés dans ledit bain de verre fondu (V), **caractérisé en ce que** l'introduction desdits déchets (D) dans ledit réacteur (1) est mise en oeuvre avec double refroidissement ; les surfaces externe (50), côté phase gazeuse (G) traversée, et interne (50'), côté arrivée des déchets (D), du dispositif d'alimentation (5) dudit réacteur (1) en lesdits déchets (D) étant toutes deux refroidies, avantageusement de façon indépendante ; ladite surface externe (50) étant ainsi refroidie, principalement en référence au problème de la corrosion, avantageusement par circulation d'au moins un fluide caloporteur maintenu à une température supérieure au point de rosée de ladite phase gazeuse (G) et ladite surface interne (50') étant ainsi refroidie, principalement dans le but de minimiser les calories susceptibles d'être transférées auxdits déchets (D).

2. Procédé selon la revendication 1, **caractérisé en ce que** lesdits déchets (D) sont introduits cernés par un courant d'oxygène ou d'un gaz renfermant de l'oxygène.

3. Procédé selon l'une des revendications 1 ou 2, **caractérisé en ce que** , en sus de l'oxygène ou du gaz renfermant de l'oxygène délivré à titre de comburant dans ladite phase gazeuse (G), de l'oxygène ou du gaz renfermant de l'oxygène est injecté dans ledit bain de verre fondu (V), en une quantité suffisante pour minimiser voire éviter la formation de métal au sein dudit bain de verre (V) ; avantageusement, en une quantité suffisante pour aussi assurer une agitation modérée dudit bain de verre (V).

4. Procédé selon la revendication 3, **caractérisé en ce que** ledit oxygène ou gaz renfermant de l'oxygène injecté dans ledit bain de verre (V) est introduit dans ledit réacteur (1) en dessous de la surface (S) dudit bain de verre (V).

5. Procédé selon l'une quelconque des revendications 1 à 4, **caractérisé en ce qu'**il est aussi mis en oeuvre avec refroidissement des parois (3, 3') dudit réacteur (1) et/ou des moyens, autres que ledit dispositif d'alimentation (5) dudit réacteur (1) en lesdits déchets (D), introduits dans ledit réacteur (1) au niveau de ladite phase gazeuse (G) et dudit bain de verre (V), pour notamment l'alimentation dudit réacteur (1) en oxygène ou en un gaz renfermant de l'oxygène.

6. Procédé selon la revendication 5, **caractérisé en ce que** lesdites parois (3,3') dudit réacteur (1) au contact de ladite phase gazeuse (G) et/ou lesdits moyens introduits dans ledit réacteur (1) au niveau de ladite phase gazeuse (G) sont refroidis par circulation d'au moins un fluide caloporteur maintenu à une température supérieure au point de rosée de ladite phase gazeuse (G).

7. Procédé selon l'une quelconque des revendications 1 à 6, **caractérisé en ce que** ledit bain de verre (V) est chauffé, par induction, à la flamme, à la torche plasma ou au moyen d'électrodes plongeantes.

8. Procédé selon l'une quelconque des revendications 1 à 7, **caractérisé en ce qu'**il est mis en oeuvre dans un creuset froid chauffé par induction.

9. Procédé selon l'une quelconque des revendications 1 à 8, **caractérisé en ce qu'**il est mis en oeuvre pour le traitement de déchets radioactifs.

10. Dispositif de traitement, par incinération et vitrification, de déchets organiques (D), solides divisés et/ou liquides, comprenant un réacteur (1) associé à des moyens de chauffage (2), aptes à maintenir dans le fond dudit réacteur (1) un bain de verre fondu (V), et équipé :
- de moyens de vidange (4) dudit bain de verre fondu (V),
- d'un dispositif d'alimentation (5) en lesdits déchets (D) à incinérer et vitrifier, ledit dispositif (5) débouchant au-dessus de la surface (S) dudit bain de verre fondu (V),
- de moyens d'alimentation (6) en oxygène ou en un gaz renfermant de l'oxygène , délivrant ledit oxygène ou ledit gaz au-dessus de la surface (S) dudit bain de verre fondu (V),
- d'au moins une sortie (7) des gaz de combustion, ménagée, dans la partie haute dudit réacteur (1), bien au-dessus de la surface (S) dudit bain de verre fondu (V),
**caractérisé en ce que** ledit dispositif d'alimentation (5) en lesdits déchets (D) présente une structure tubulaire, délimitée par une surface externe (50) et une surface interne (50'); ladite structure incluant dans sa masse au moins deux circuits de circulation, avantageusement indépendants, (51, 52) pour des fluides caloporteurs, au moins l'un (51) desdits circuits (51, 52) étant destiné à assurer le refroidissement de ladite masse et de ladite surface externe (50) dudit dispositif d'alimentation (5), au moins un autre (52) desdits circuits (51, 52) étant destiné à assurer le refroidissement de ladite surface interne (50') dudit dispositif d'alimentation (5).

11. Dispositif selon la revendication 10, **caractérisé en ce que** ledit dispositif d'alimentation (5) en lesdits déchets (D) comprend également dans sa structure des moyens (53, 54) pour véhiculer et délivrer en son extrémité (55) débouchant au dessus de la surface (S) dudit bain de verre (V) de l'oxygène ou un gaz renfermant de l'oxygène ; lesdits moyens (53, 54) comprenant avantageusement un tore (54) de délivrance dudit oxygène ou dudit gaz, agencé autour de ladite extrémité (55).

12. Dispositif selon l'une des revendications 10 ou 11, **caractérisé en ce que** ledit réacteur (1) est en outre équipé de moyens (8) pour injecter de l'oxygène ou un gaz renfermant de l'oxygène dans ledit bain de verre (V).

13. Dispositif selon la revendication 12, **caractérisé en ce que** lesdits moyens (8) pour injecter de l'oxygène ou un gaz renfermant de l'oxygène dans ledit bain de verre (V) sont introduits dans la partie basse dudit réacteur (1), en dessous de la surface (S) dudit bain de verre (V).

14. Dispositif selon l'une des revendications 12 ou 13, **caractérisé en ce que** lesdits moyens (8) pour injecter de l'oxygène dans ledit bain de verre (V), disposés verticalement, traversent le fond dudit réacteur (1) et présentent une embouchure (82) à 90° de leur axe vertical.

15. Dispositif selon l'une quelconque des revendications 10 à 14, **caractérisé en ce que** les moyens (6; 8), autres que ledit dispositif d'alimentation (5) dudit réacteur (1) en lesdits déchets (D), introduits dans ledit réacteur (1) au niveau de ladite phase gazeuse (G) et dudit bain de verre (V), pour notamment l'alimentation dudit réacteur (1) en oxygène ou en un gaz renfermant de l'oxygène, incluent, dans leur structure, au moins un circuit de circulation (61; 83+83') d'un fluide caloporteur.

16. Dispositif selon l'une quelconque des revendications 10 à 15, **caractérisé en ce que** les parois (3, 3') dudit réacteur (1) sont du type double enveloppe, pour permettre la circulation d'un fluide caloporteur.

17. Dispositif selon l'une quelconque des revendications 10 à 16, **caractérisé en ce que** ledit réacteur (1) est un creuset froid et **en ce que** lesdits moyens de chauffage (2) sont des moyens de chauffage par induction.

## Claims

1. A method of processing organic waste (D) in divided solid and/or liquid form, the method being implemented in a single reactor (1) containing a bath of molten glass (V) surmounted by a gas phase (G), the method comprising incinerating said waste (D) in the presence of oxygen at the surface (S) of said bath of molten glass (V), and vitrifying said incinerated waste (D) in said bath of molten glass (V), the method being **characterized in that** said waste (D) is introduced into said reactor (1) with associated dual cooling; the device (5) for feeding said reactor (1) with said waste (D) having both of its surfaces cooled : its external surface (50), on its side adjacent to the gas phase (G) that it passes through and its internal surface (50'), on its side adjacent to the incoming waste (D) ; said external surface (50) being so cooled, mainly in reference to the problem of corrosion, advantageously by circulating at least one cooling fluid maintained at a temperature that is higher than the dew point of said gas phase (G), and said internal surface (50') being so cooled, mainly so as to minimize the amount of heat able to be transferred to the waste (D).

2. The method according to claim 1, **characterized in that** said waste (D) is introduced immersed in a flow of oxygen or in a flow of gas including oxygen.

3. The method according to claim 1 or claim 2, **characterized in that** in addition to the oxygen or gas including oxygen delivered as oxidizer into said gas phase (G), oxygen or gas including oxygen is injected into said bath of molten glass (V) in sufficient quantity to minimize or even to avoid metal forming within said bath of glass (V); advantageously, in sufficient quantity to also impart moderate stirring to said bath of glass (V).

4. The method according to claim 3, **characterized in that** said oxygen or gas including oxygen injected into said bath of glass (V) is introduced into said reactor (1) beneath the surface (S) of said bath of glass (V).

5. The method according to any one of claims 1 to 4, **characterized in that** it is also implemented with cooling of the walls (3, 3') of said reactor (1) and/or of means other than said device (5) for feeding said reactor (1) with said waste (D) that are introduced into said reactor (1) in said gas phase (G) and in said bath of glass (V), in particular for feeding said reactor (1) with oxygen.

6. The method according to claim 5, **characterized in that** said walls (3, 3') of said reactor (1) in contact with said gas phase (G) and/or said means introduced into said reactor (1) in said gas phase (G) are cooled by circulating at least one cooling fluid that is maintained at a temperature higher than the dew point of said gas phase (G).

7. The method according to any one of claims 1 to 6, **characterized in that** said bath of glass (V) is heated by induction, by flame, by a plasma torch, or by means of electrodes dipped into the bath.

8. The method according to any one of claims 1 to 7, **characterized in that** it is implemented in a cold crucible heated by induction.

9. The method according to any one of claims 1 to 8, **characterized in that** it is implemented for processing radioactive waste.

10. An apparatus for processing organic waste (D) in divided solid and/or liquid form by incineration and by vitrification, the apparatus comprising a reactor (1) associated with heater means (2) suitable for maintaining a bath of molten glass (V) in the bottom of said reactor (1) and fitted with:
- means (4) for emptying said bath of molten glass (V);
- a device (5) for feeding said waste (D) to be incinerated and vitrified, said device (5) opening out above the surface (S) of said bath of molten glass (V);
- means (6) for feeding oxygen or a gas including oxygen, delivering said oxygen or said gas above the surface (S) of said bath of molten glass (V); and
- at least one outlet (7) for combustion gases provided in the top portion of said reactor (1) well above the surface (S) of said bath of molten glass (V);
the apparatus being **characterized in that** said device (5) for feeding said waste (D) is of a tubular structure, being defined by an outer surface (50) and an inner surface (50'), said structure including in its thickness at least two advantageously independent circuits (51, 52) for circulating cooling fluids, at least one (51) of said circuits (51, 52) being for cooling said thickness and said outer surface (50) of said feeder device (5), and at least one other (52) of said circuits (51, 52) being for cooling said inner surface (50') of said feeder device (5).

11. The apparatus according to claim 10, **characterized in that** said device (5) for feeding said waste (D) also includes in its structure means (53, 54) for conveying and delivering oxygen or a gas including oxygen at its open end (55) above the surface (S) of said bath of glass (V), said means (53, 54) advantageously comprising a torus (54) delivering said oxygen or said gas and arranged around said end (55).

12. The apparatus according to claim 10 or claim 11, **characterized in that** said reactor (1) is also fitted with means (8) for injecting oxygen or a gas including oxygen into said bath of glass (V).

13. The apparatus according to claim 12, **characterized in that** said means (8) for injecting oxygen or a gas including oxygen into said bath of glass (V) are introduced into the bottom portion of said reactor (1) beneath the surface (S) of said bath of glass (V).

14. The apparatus according to claim 12 or claim 13, **characterized in that** said means (8) for injecting oxygen into said bath of glass (V) are disposed vertically, pass through the bottom of said reactor (1), and present an opening (82) at 90° to their vertical axis.

15. The apparatus according to any one of claims 10 to 14, **characterized in that** the means (6; 8), other than said device (5) for feeding said reactor (1) with waste (D), introduced into said reactor (1) in said gas phase (G) and in said bath of glass (V), in particular for feeding said reactor (1) with oxygen or a gas including oxygen, include within their structure at least one circuit (61; 83+83') for circulating a cooling fluid.

16. The apparatus according to any one of claims 10 to 15, **characterized in that** the walls (3, 3') of said reactor (1) are of the double-walled type, so as to enable a cooling fluid to circulate.

17. The apparatus according to any one of claims 10 to 16, **characterized in that** said reactor (1) is a cold crucible and **in that** said heater means (2) are means for induction heating.

## Patentansprüche

1. Verfahren zur Behandlung von teilchenformigen festen und/oder flüssigen organischen Abfällen (D), die in einen neuartigen Reaktor (1) eingeführt werden, der ein Bad aus geschmolzenem Glas (V) enthält, oberhalb dessen sich eine Gasphase (G) befindet, wobei das Verfahren umfasst die Verbrennung der Abfälle (D) in Gegenwart von Sauerstoff an der Oberfläche (S) des Bades aus geschmolzenem Glas (V) und die Vitrifikation der verbrannten Abfälle (D) in dem Bad aus geschmolzenem Glas (V), **dadurch gekennzeichnet, dass** die Einführung der Abfälle (D) in den Reaktor (1) unter doppelter Kühlung durchgeführt wird, wobei die äußere Oberfläche (50) auf der Seite der durchquerten Gasphase (G) und die innere Oberfläche (50') auf der Seite der Zufuhr der Abfälle (D) der Vorrichtung (5) zur Einführung der Abfälle (D) in den Reaktor (1) beide, vorzugsweise unabhängig voneinander, gekühlt werden, wobei die äußere Oberfläche (50) gekühlt wird hauptsächlich wegen des Korrosionsproblems, zweckmäßig durch Zirkulierenlassen mindestens eines Kühlmittelfluids, das bei einer Temperatur oberhalb des Taupunktes der Gasphase (G) gehalten wird, und die innere Oberfläche (50') gekühlt wird hauptsächlich mit dem Ziel, die Wärmemenge, die auf die Abfälle (D) übertragen werden kann, zu minimieren.

2. Verfahren nach Anspruch 1, **dadurch gekennzeichnet, dass** die Abfälle (D) bei ihrer Einführung von einem Sauerstoffstrom oder dem Strom eines Sauerstoff enthaltenden Gases umgeben sind.

3. Verfahren nach einem der Ansprüche 1 oder 2, **dadurch gekennzeichnet, dass** über den Sauerstoff oder das Sauerstoff enthaltende Gas hinaus, das als Sauerstoffträger in die Gasphase (G) eingeführt wird, Sauerstoff oder ein Sauerstoff enthaltendes Gas in das Bad aus geschmolzenem Glas (V) eingeleitet wird in einer Menge, die ausreicht, um die Bildung von Metall im Innern des Bades aus geschmolzenem Glas (V) zu minimieren oder sogar zu verhindern, zweckmäßig in einer Menge, die ausreicht, um auch eine mäßige Durchrührung des Bades aus geschmolzenem Glas (V) zu gewährleisten.

4. Verfahren nach Anspruch 3, **dadurch gekennzeichnet, dass** der Sauerstoff oder das Sauerstoff enthaltende Gas, der (das) in das Bad aus geschmolzenem Glas (V) eingeführt wird, in den Reaktor (1) unterhalb der Oberfläche (S) des Bades aus geschmolzenem Glas (V) eingeleitet wird.

5. Verfahren nach einem der Ansprüche 1 bis 4, **dadurch gekennzeichnet, dass** es außerdem durchgeführt wird unter Kühlen der Wände (3, 3') des Reaktors (1) und/oder anderer Einrichtungen als der Einrichtung (5) zur Einführung der Abfälle (D) in den Reaktor (1), die in den Reaktor (1) im Bereich der Gasphase (G) und des Bades aus geschmolzenem Glas (V) eingeführt werden, um insbesondere dem Reaktor (1) Sauerstoff oder ein Sauerstoff enthaltendes Gas zuzuführen.

6. Verfahren nach Anspruch 5, **dadurch gekennzeichnet, dass** die Wände (3,3') des Reaktors (1), die mit der Gasphase (G) in Kontakt stehen, und/oder die Einrichtungen, die im Bereich der Gasphase (G) in den Reaktor (1) eingeführt werden, gekühlt werden durch Zirkulierenlassen mindestens eines Kühlmittelfluids, das bei einer Temperatur oberhalb des Taupunktes der Gasphase (G) gehalten wird.

7. Verfahren nach einem der Ansprüche 1 bis 6, **dadurch gekennzeichnet, dass** das Bad aus geschmolzenem Glas (V) erwärmt wird durch Induktion, mit einer Flamme, mit dem Plasmabrenner oder mittels eingetauchter Elektroden.

8. Verfahren nach einem der Ansprüche 1 bis 7, **dadurch gekennzeichnet, dass** es in einem kalten Tiegel durchgeführt wird, der durch Induktion erwärmt wird.

9. Verfahren nach einem der Ansprüche 1 bis 8, **dadurch gekennzeichnet, dass** es durchgeführt wird zur Behandlung von radioaktiven Abfällen.

10. Vorrichtung zum Behandeln von teilchenförmigen festen und oder flüssigen organischen Abfällen (D) durch Verbrennen und Vitrifizieren, die umfasst einen Reaktor (1), der mit Heizeinrichtungen (2) ausgestattet ist, die geeignet sind, am Boden des Reaktors (1) ein Bad aus geschmolzenem Glas (V) aufrechtzuerhalten, und die ausgestattet ist mit:
- Einrichtungen (4) zum Abziehen des Bades aus geschmolzenem Glas (V),
- einer Einrichtung (5) zur Einführung der zu verbrennenden und zu vitrifizierenden Abfälle (D), wobei die Einrichtung (5) oberhalb der Oberfläche (S) des Bades aus geschmolzenem Glas (V) mündet,
- Einrichtungen (6) zur Einführung von Sauerstoff oder eines Sauerstoff enthaltenden Gases, die den Sauerstoff oder das Sauerstoff enthaltende Gas oberhalb der Oberfläche (S) des Bades aus geschmolzenem Glas (V) einleitet,
- mindestens einen Auslass (7) für Verbrennungsgase, der in dem oberen Abschnitt des Reaktors (1) weit oberhalb der Oberfläche (S) des Bades aus geschmolzenem Glas (V) angeordnet ist.
**dadurch gekennzeichnet, dass** die Einrichtung (5) zur Einführung der Abfälle (D) eine rohrformige Struktur hat, die von einer äußeren Oberfläche (50) und einer inneren Oberfläche (50') begrenzt ist, wobei diese Struktur in ihrem Körper mindestens zwei Zirkulationskreisläufe (51, 52), die zweckmäßig unabhängig voneinander sind, für Kühlmittelfluids enthält, wobei mindestens einer (51) der Kreisläufe (51, 52) der Abkühlung des Körpers und der äußeren Oberfläche (50) der Zuführungseinrichtung (5) dienen soll, und mindestens ein anderer (52) der Kreisläufe (51, 52) die Abkühlung der inneren Oberfläche (50') der Zuführungseinrichtung (5) gewährleisten soll.

11. Vorrichtung nach Anspruch 10, **dadurch gekennzeichnet, dass** die Einrichtung (5) zur Zuführung der Abfälle (D) in ihrer Struktur außerdem Einrichtungen (53, 54) umfasst, um aus ihrem Ende (55), das oberhalb der Oberfläche (S) des Bades aus geschmolzenem Glas (V) mündet. Sauerstoff oder ein Sauerstoff enthaltendes Gas zu transportieren und einzuführen, wobei die Einrichtungen (53, 54) zweckmäßig einen Ring (54) zur Zuführung des Sauerstoffs oder des Gases aufweisen, der um das Ende (55) herum angeordnet ist.

12. Vorrichtung nach einem der Ansprüche 10 oder 11, **dadurch gekennzeichnet, dass** der Reaktor (1) außerdem Einrichtungen (8) zum Einleiten von Sauerstoff oder eines Sauerstoff enthaltenden Gases in das Bad aus geschmolzenem Glas (V) aufweist.

13. Vorrichtung nach Anspruch 12, **dadurch gekennzeichnet, dass** die Einrichtungen (8) zum Einleiten von Sauerstoff oder eines Sauerstoff enthaltenden Gases in das Bad aus geschmolzenem Glas (V) in dem unteren Abschnitt des Reaktors (1) unterhalb der Oberfläche (S) des Bades aus geschmolzenem Glas (V) angeordnet sind.

14. Vorrichtung nach einem der Ansprüche 12 oder 13, **dadurch gekennzeichnet, dass** die Einrichtungen (8) zum Einleiten von Sauerstoff in das Bad aus geschmolzenem Glas (V), die vertikal angeordnet sind, den Boden des Reaktors (1) durchqueren und eine Einmündung (82) unter einem Winkel von 90 ° zu ihrer vertikalen Achse aufweisen.

15. Vorrichtung nach einem der Ansprüche 10 bis 14, **dadurch gekennzeichnet, dass** die Einrichtungen (6; 8) im Gegensatz zu der Einrichtung (5) zur Einführung der Abfälle (D) in den Reaktor (1), die in dem Reaktor (1) im Bereich der Gasphase (G) und des Bades aus geschmolzenem Glas (V) angeordnet sind, um insbesondere Sauerstoff oder ein Sauerstoff enthaltendes Gas in den Reaktor (1) einzuleiten. in ihrer Struktur mindestens einen Kreislauf (61; 83+83') für ein Kühlmittelfluid aufweisen.

16. Vorrichtung nach einem der Ansprüche 10 bis 15, **dadurch gekennzeichnet, dass** die Wände (3, 3') des Reaktors (1) solche vom Doppelwand-Typ sind, um die Zirkulation eines Kühlmittelfluids zu ermöglichen.

17. Vorrichtung nach einem der Ansprüche 10 bis 16, **dadurch gekennzeichnet, dass** der Reaktor (1) ein kalter Tiegel ist und dass die genannten Heizeinrichtungen (2) Induktions-Heizeinrichtungen sind.
